# EUROPÄISCHE PATENTSCHRIFT

(11) **EP 3 212 944 B1**
(45) Veröffentlichungstag und Bekanntmachung des Hinweises auf die Patenterteilung: **31.10.2018**
(21) Anmeldenummer: 15781589.5
(22) Anmeldetag: 21.09.2015
(51) Int. Cl.: F16B 7/18, F16B 35/06

(54) **PROFILVERBINDERSCHRAUBE**
PROFILE CONNECTOR SCREW
VIS DE RACCORD DE PROFILÉS

(30) Priorität: 28.10.2014 DE 202014105146 U
(43) Veröffentlichungstag der Anmeldung: 06.09.2017
(73) Patentinhaber: Flaig, Hartmut, 78554 Aldingen (DE)
(72) Erfinder: Flaig, Hartmut, 78554 Aldingen (DE)
(74) Vertreter: Patentanwälte Behrmann Wagner PartG mbB
(86) Internationale Anmeldenummer: PCT/EP2015/071535
(87) Internationale Veröffentlichungsnummer: WO 2016/066332

(56) Entgegenhaltungen:
- EP-A1- 1 798 424
- DE-U1- 20 312 075
- FR-A1- 2 669 714
- US-A- 4 685 848

## Beschreibung

Die Erfindung betrifft eine Profilverbinderschraube gemäß dem Oberbegriff des Anspruchs 1 zum Festlegen eines mindestens eine hinterschnittene Längsnut aufweisenden ersten Profilstabs an einem Bauteil, welches insbesondere als zweiter Profilstab, bevorzugt ebenfalls mit mindestens einer hinterschnittenen Längsnut ausgebildet ist. Die Profilverbinderschraube weist einen Schaft mit Außengewinde zum Fixieren der Profilverbinderschraube in einem Innengewinde des Bauteils, insbesondere in einem Zentralkanal mit Innengewinde eines zweiten Profilstabes auf. Darüber hinaus ist die Profilverbinderschraube mit einem Schraubenkopf zur Anordnung in der hinterschnittenen Längsnut bzw. zum Hintergreifen des Hinterschnitts ausgestattet, wobei der Schraubenkopf Antriebsmittel, umfassend eine Verzahnung aufweist. Ferner betrifft die Erfindung einen Profilstab, insbesondere zur Verwendung mit einer erfindungsgemäßen Profilverbinderschraube gemäß dem Oberbegriff des Anspruchs 6, eine Profilverbindung gemäß Anspruch 7, einem Werkzeugadapter gemäß Anspruch 9 sowie ein System zum Herstellen einer solchen Profilverbindung gemäß Anspruch 12.

Es ist bekannt, zum Herstellen von Profilverbindungen Schrauben einzusetzen, die mittels eines Schraubenkopfes einen Längsnuthinterschnitt eines ersten Profils hintergreifen und mit einem Außengewindeschaft in ein Innengewinde einer Zentrallochöffnung in einem zweiten Profilstab verschraubt sind, um den ersten Profilstab gegen die Stirnseite des zweiten Profilstabes zu verspannen. Als Antrieb weist eine in der EP 1 651 873 B1 beschriebene Profilverbinderschraube an ihrem Schraubenkopf eine Verzahnung auf, wobei die Verzahnung in einem Konusabschnitt des Schraubenkopfes vorgesehen ist, derart, dass die Oberseite der Verzahnung, d.h. eine Kopfebene der Verzahnung zur Schaftlängsachse der Schraube geneigt ist, also eine konische Hüllkontur beschreibt. Mit anderen Worten ist bei der bekannten Schraube eine Kegelradverzahnung realisiert. Die bekannte Profilverbinderschraube wird betätigt, indem schräg in die hinterschnittene Längsnut ein Verzahnungswerkzeug eingeführt und mit der konischen Verzahnung der Profilverbinderschraube in Eingriff gebracht wird. Nachteilig dabei ist, dass das Werkzeug während des Verdrehens immer in Richtung Verzahnung kraftbeaufschlagt werden muss bzw. eine Radialkraftkomponente von dem Schraubenkopf der Profilverbinderschraube wegfährt.

Eine alternative bekannte Profilverbinderschraube ist in der DE 201 06 561 U1 beschrieben. Die Verzahnung des Schraubenkopfes ist hierbei derart radial angeordnet, dass die Kopfebene der Verzahnung auf einer Zylindermantelfläche liegt. Anders ausgedrückt bildet die Verzahnung eine Art Rändelung, mit welcher das in eine hinterschnittene Längsnut schräg einzuführende Werkzeug in Eingriff gebracht werden muss, wobei auch hier ein stetiger Druck in Richtung Schraubenkopf ausgeübt werden muss, um einen dauerhaften Eingriff des Werkzeugs in die Verzahnung beim Verdrehen zu gewährleisten.

Die DE 203 12 075 U1 beschreibt eine gattungsgemäße Profilverbinderschraube, die mit einer Kegelverzahnung versehen ist. Beim Festziehen der bekannten Profilverbinderschraube wirkt auf das Werkzeug eine Radialkraftkomponente, die bestrebt ist, das Werkzeug von der Verzahnung wegzudrücken, wodurch der Festziehvorgang deutlich erschwert wird.

Die US 4,685,848 A beschreibt eine fachfremde Schraube zum Herstellen von Holzverbindungen bei der Möbelherstellung. Die bekannte Schraube weist eine Kegelverzahnung auf.

Insgesamt haben sich die bekannten Profilverbinderschrauben mit Verzahnungsantrieb als aufwendig handhabbar herausgestellt, so dass häufig auf andersartige Profilverbinder zurückgegriffen wird.

Der Erfindung liegt daher die Aufgabe zugrunde, eine Profilverbinderschraube mit Verzahnungsantriebsmitteln anzugeben, die leicht und mit möglichst wenig Kraftaufwand handhabbar ist. Ferner besteht die Aufgabe darin, einen auf eine derartige Profilverbinderschraube abgestimmten Profilstab anzugeben, der die Handhabung der Profilverbinderschraube nochmals erleichtert. Darüber hinaus besteht die Aufgabe darin, eine Profilverbindung mit einer derartigen verbesserten Profilverbinderschraube sowie ein System zum Herstellen einer solchen Profilverbindung anzugeben.

Diese Aufgabe wird hinsichtlich der Profilverbinderschraube mit den Merkmalen des Anspruchs 1, hinsichtlich des Profilstabes mit den Merkmalen des Anspruchs 6, hinsichtlich der Profilverbindung mit den Merkmalen des Anspruchs 7 und hinsichtlich des Systems mit den Merkmalen des Anspruchs 12 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, die am Schraubenkopf der Profilverbinderschraube vorgesehene Verzahnung derart auszubilden und anzuordnen, dass diese möglichst keine Radialkraftkomponente bei der Wechselwirkung mit einem Werkzeug auf dieses bewirkt, was erfindungsgemäß dadurch erreicht wird, dass die Verzahnung als stirnseitige Kronenradverzahnung ausgebildet ist, so dass ein Betätigungswerkzeug zum Verdrehen der Profilverbinderschraube in einen Bereich unterhalb der stirnseitigen Verzahnung, d.h. bezogen auf die Längserstreckung der Schraube axial zwischen Verzahnung und Längsnutboden eingebracht werden kann und durch Verdrehen des Werkzeuges die Profilverbinderschraube in Umfangsrichtung verdreht, ohne dass es hierzu notwendig ist, dass Werkzeug beim Verdrehen in Richtung Profilverbinderschraube kraftzubeaufschlagen bzw. das Werkzeug aus radialer Richtung gegen die Profilverbinderschraube zu drücken. Bevorzugt ist die Verzahnung dabei derart ausgelegt, dass das Werkzeug nur eine Kraft in Umfangsrichtung auf die Profilverbinderschraube ausübt und zumindest sich nicht in radialer Richtung an der Profilverbinderschraube abstützt.

Aufgrund der erfindungsgemäßen Maßnahme besteht im Gegensatz zu den aus dem Stand der Technik bekannten Schrauben während der Betätigung nicht die Tendenz, dass das Werkzeug radial von der Schraube weggedrückt wird bzw. dass sich der Verzahnungseingriff löst, sondern das Werkzeug kann durch unterhalb der Kronenradverzahnung der Profilverbinderschraube positioniert und mit dieser in Eingriff gebracht und in Umfangsrichtung verdreht werden, ohne dass vom Benutzer darauf geachtet werden muss, dass Verzahnung und Werkzeug in Eingriff bleiben, da das Werkzeug nicht weggedrückt wird.

Ganz besonders bevorzugt ist eine Ausführungsform der Profilverbinderschraube, bei der die Kronenradverzahnung in einem eine zylinderförmige Hüllkontur aufweisenden Abschnitt, des vorzugsweise insgesamt zylindrischen Schraubenkopfes vorgesehen ist. Hierunter ist eine Ausführungsform zu verstehen, bei der die radial äußere Seite, d.h. die Mantelflächenseite der Verzahnung bzw. die Außenumfangsseite der Verzahnung flächig auf einer gedachten Zylindermantelfläche liegt und gleichzeitig die obere, d.h. von dem Außengewinde bzw. dem Schaft abgewandte Seite der Verzahnung, d.h. die Kopfebene der Verzahnung flächig in einer Radialebene liegt, d.h. in einer Ebene, die sich senkrecht zur Längserstreckung der Profilverbinderschraube erstreckt.

Ganz besonders bevorzugt ist es, wenn die Außenumfangshüllkontur der Verzahnung zylindermantelförmig ist, d.h. dass die Außenumfangsflächen sich im Wesentlichen in axialer und in Umfangsrichtung erstrecken, also keine Kontur beschreiben, die schräg zur Längsachse der Profilverbinderschraube, sondern parallel zur Längsmittelachse der Profilverbinderschraube verlaufen.

Erfindungsgemäß ist vorgesehen, dass die Fußlinien, d.h. der sich von radial außen nach radial innen erstreckende Grund einer Vertiefung zwischen zwei in Umfangsrichtung benachbarten Zähnen, sich in einer Radialebene der Profilverbinderschraube befinden bzw. mit dieser Radialebene zusammenfallen. Anders ausgedrückt, verläuft eine Fußebene nicht winklig zu einer Radialebene, d.h. die Fußebene erstreckt sich, insbesondere exakt, senkrecht zur Längsmittelachse der Profilverbinderschraube.

Die Fußebene ist dabei eine Ebene, die die Vielzahl von in Umfangsrichtung über jeweils einen Zahn beabstandeten, sich von radial außen nach radial innen erstreckenden Fußlinien, d.h. den jeweiligen Grund bzw. Boden eines von zwei Zähnen begrenzten Tals in sich aufnimmt.

Zusätzlich oder alternativ zur Anordnung der Fußebene der Verzahnung in einer Radialebene der Profilverbinderschraube ist erfindungsgemäß vorgesehen, dass eine Kopfebene der Verzahnung sich senkrecht zur Längserstreckung bzw. Längsmittelachse der Profilverbinderschraube erstreckt. Anders ausgedrückt, ist erfindungsgemäß zur Vermeidung von Radialkraftkomponenten vorgesehen, dass die Kopfebene der Verzahnung mit einer Radialebene der Profilverbinderschraube zusammenfällt, wobei es noch weiter bevorzugt ist, wenn die Kopfebene parallel verläuft zur Fußebene der Verzahnung. Die Kopfebene wird gebildet von den in Umfangsrichtung über jeweils ein zwischen zwei Zähnen gebildetes Tal beabstandeten Kopflinien, die sich von radial außen nach radial innen erstrecken. Die Kopfebene ist also die Ebene, in der die Kopflinien, oder anders ausgedrückt Firstlinien verlaufen.

Problematisch bei den bekannten Profilverbinderschrauben ist auch deren Schwergängigkeit. Weiterbildungsgemäß soll hier ebenfalls eine Verbesserung stattfinden, was dadurch erreicht werden kann, dass die Zahnflanken der Verzahnung, zumindest abschnittsweise, eine Evolventengeometrie aufweisen, so dass die Verzahnung mit einem, bevorzugt jedoch nicht zwingend eine Evolventengeometrie aufweisenden Antriebswerkzeug in der Art einer Evolventenverzahnung zusammenwirken kann. Hierdurch rollen die Zähne besser ab und der Kraftaufwand zum Betätigen der Profilverbinderschraube wird weiter verbessert. Ein Verkanten wird zudem verhindert.

Insgesamt hat es sich als sehr vorteilhaft herausgestellt, wenn die Radialerstreckung der Zähne der Verzahnung größer ist als deren Axialerstreckung in der Längsrichtung der Schraube, was bei den konischen Verzahnungsformen aus dem Stand der Technik nicht der Fall ist. Durch die große Radialerstreckung kann mit dem Werkzeug an nahezu beliebiger Position unterhalb des Schraubenkopfes mit der Verzahnung in Wechselwirkung getreten werden.

Besonders bevorzugt ist eine Ausführungsvariante der Profilschraube, bei der zusätzlich zu dem Verzahnungsantrieb ein weiterer Antrieb vorgesehen ist, insbesondere stirnseitig im Schraubenkopf in der Form einer Antriebsvertiefung mit beispielsweise einer Mehrkant- oder Torxgeometrie. Mit diesem Antrieb kann die Schraube in dem Bauteil vormontiert werden, so dass mit der Verzahnung nur ein letztes Anziehen der Schraube bewirkt werden muss.

Die Erfindung führt auch auf einen Profilstab, insbesondere aus einer Leichtmetalllegierung, noch weiter bevorzugt aus einer Aluminiumlegierung, insbesondere zur Verwendung mit einer nach dem Konzept der Erfindung ausgebildeten Profilverbinderschraube, wobei der Profilstab bevorzugt eine rechteckige, insbesondere quadratische Querschnittskontur aufweist, wobei zumindest in einer von insgesamt vier rechtwinklig angeordneten Seitenflächen, noch weiter bevorzugt in mindestens zwei Seitenflächen, ganz besonders bevorzugt in sämtlichen vier Seitenflächen (jeweils) mindestens eine hinterschnittene Längsnut vorgesehen ist, deren Längsnutöffnung zwischen zwei Hinterschnittabschnitten ausgebildet ist, wobei die Hinterschnittabschnitte vom Schraubenkopf einer Profilverbinderschraube hintergriffen werden können. Der nach dem Konzept der Erfindung ausgebildete Profilstab zeichnet sich dadurch aus, dass zusätzlich zu der hinterschnittenen Längsnut eine Führungsnut zum Führen eines Werkzeugs zum Betätigen der Profilverbinderschraube, insbesondere zum Eingriff in die Verzahnung der Profilverbinderschraube vorgesehen ist. Anders ausgedrückt, ist innerhalb der hinterschnittenen Längsnut eine weitere nutförmige Vertiefung vorgesehen, die in der Folge abschnittsweise den Nutboden der hinterschnittenen Längsnut bildet, wobei die Führungsnut seitliche Führungswände aufweist, um das Werkzeug zu stützen, bzw. zu verhindern, dass das Werkzeug beliebig seitlich in der hinterschnittenen Längsnut bewegbar ist. Hierzu ist die Breite der von der Längsnutöffnung beabstandeten Führungsnut bevorzugt deutlich geringer als die maximale Breite der hinterschnittenen Längsnut. Bevorzugt ist die Nutbreite der Führungsnut geringer als die Breite der von den Hinterschnittabschnitten begrenzten Längsnutöffnung. Auch ist es denkbar, dass die Nutbreite der Führungsnut näherungsweise der Breite der vorgenannten Längsnutöffnung entspricht.

Der erfindungsgemäße Profilstab eignet sich insbesondere zur Verwendung mit einer nach dem Konzept der Erfindung ausgebildeten Profilverbinderschraube, ist jedoch grundsätzlich auch mit anderen aus dem Stand der Technik bekannten Profilverbinderschrauben verwendbar.

Eine optimale Führung kann weiterbildungsgemäß dadurch gewährleistet werden, dass die Führungswände nicht senkrecht zu einem Führungsnutboden verlaufen, sondern dass die Führungsnut eine konkav gekrümmte Querschnittskontur aufweist. Bevorzugt beschreibt die Führungsnut im Querschnitt einen Kreisbogenabschnitt.

Wie bereits erwähnt, bildet die Führungsnut abschnittsweise einen Nutboden der hinterschnittenen Längsnut oder anders ausgedrückt erstreckt sich die Führungsnut ausgehend von dem eigentlichen Nutboden der hinterschnittenen Längsnut weiter von der zugehörigen Flächenseite des Profistabes in den Profilstab hinein. Besonders bevorzugt ist es dabei, wenn rechts und links an eine der Längsnutöffnung zugewandte Oberkante der Führungswände jeweils ein Längsnutabschnitt angrenzt, der parallel zu einer die Längsnutöffnung aufweisenden Außenfläche (Flächenseite) des Profilstabes verläuft oder unter einem Winkel hierzu von mehr als 50°, insbesondere von mehr als 85°.

Die Erfindung führt auch auf eine Profilverbindung mit einer in ein Innengewinde eines Bauteils, insbesondere eines zweiten Profilstabes, noch weiter bevorzugt in einen Zentralkanal eines derartigen Profilstabes geschraubten Profilverbinderschraube nach dem Konzept der Erfindung, deren Schraubenkopf in einer hinterschnittenen Längsnut eines bevorzugt, jedoch nicht zwingend nach dem Konzept der Erfindung ausgebildeten Profilstabes aufgenommen ist, insbesondere derart, dass der Schraubenkopf die Längsöffnung begrenzenden Hinterschnittabschnitte hintergreift, wobei die Profilverbinderschraube den ersten Profilstab in Richtung des Bauteils, insbesondere stirnseitig auf einen zweiten Profilstab kraftbeaufschlagt bzw. die beiden Profilstäbe gegeneinander verspannt. Eine derartige Profilverbindung lässt sich besonders einfach durch die nach dem Konzept der Erfindung ausgebildete Profilverbinderschraube herstellen, wobei es, wie erwähnt, besonders bevorzugt ist, wenn der Profilverbinderschraube, insbesondere deren Schraubenkopf einen nach dem Konzept der Erfindung ausgebildeter Profilstab mit Führungsnut zugeordnet ist, um eine optimale Führung des Werkzeuges beim Verdrehen der Verzahnung zu gewährleisten. Die Verwendung eines nach dem Konzept der Erfindung ausgebildeten Profilstabes ist jedoch nicht zwingend, insbesondere für den Fall, dass ein später noch zu erläuternder, nach dem Konzept der Erfindung ausgebildeter Werkzeugadapter zum Einsatz kommt, da dieser für die notwendige Führung des Werkzeuges und insbesondere für einen ruhigen Lauf des Werkzeugs und der Kronenradschraube beim Festziehen oder Lösen Sorge trägt. Der herkömmliche Profilstab weist bevorzugt sämtliche Merkmale wie oben beschrieben, jedoch nicht zwingend die Führungsnut auf.

Als besonders vorteilhaft hat es sich herausgestellt, wenn der Abstand zwischen dem Fußgrund der Verzahnung der Profilschraube und einem Nutgrund einer Führungsnut des Profilstabes zumindest näherungsweise einer Führungsnutbreite entspricht.

Insgesamt ist es von Vorteil, wenn die Profilverbinderschraube, das Werkzeug und Längsnut des Profilstabes, insbesondere eine Führungsnut des Profilstabes derart aufeinander abgestimmt bzw. so relativ zueinander dimensioniert sind, dass das Werkzeug, während es sich in einem verzahnten Eingriff mit der Verzahnung des Schraubenkopfes befindet auf dem Längsnutgrund, insbesondere einem Führungsnutgrund aufliegen kann und sich dort beim Verdrehen der Schraube bzw. des Werkstückes abstützen kann.

Besonders bevorzugt ist eine Ausführungsform, bei der die maximale Nutbreite der hinterschnittenen Längsnut zumindest näherungsweise dem maximalen Durchmesser des die Kronenradverzahnung tragenden Schraubenkopfes der Profilverbinderschraube entspricht.

Die Erfindung führt auch auf einen Werkzeugadapter zum erleichterten Festziehen und/oder Lösen der nach dem Konzept der Erfindung ausgebildeten Kronenradschraube. Der Werkzeugadapter zeichnet sich durch ein Gehäuse aus, welches, vorzugsweise vollständig, in der hinterschnittenen Längsnut eines Profilstabes aufgenommen ist, wobei es besonders bevorzugt ist, wenn das Gehäuse in einen Bereich zwischen den Hinterschnitten, also in die Längsnutöffnung hinein oder darüber hinausragt. Der Werkzeugadapter eignet sich insbesondere für herkömmliche Profilstäbe ohne Führungsnut und gewährleistet die notwendige Führung für das Werkzeug, kann alternativ auch mit einem nach dem Konzept der Erfindung ausgebildeten Profilstab verwendet werden. In dem Gehäuse des Werkzeugadapters ist rotierbar ein, insbesondere stangenförmiges, ein- oder mehrteiliges Antriebselement vorgesehen. Das Antriebselement weist, insbesondere an einem vorderen, in der Einschubrichtung des Gehäuses in die hinterschnittenen Profilnut (Längsnut) gelegenen Ende einen Abtriebsabschnitt mit Verzahnung zur Wechselwirkung mit der, vorzugsweise als Evolventenverzahnung ausgebildeten, Kronenradverzahnung der Kronenradschraube (Profilverbinderschraube) auf. Zudem weist das Antriebselement einen Antriebsabschnitt auf, der einen Antrieb zum Antreiben des Antriebselementes mittels eines Werkzeuges umfasst, welches eine korrespondierende Form aufweisen sollte, beispielsweise einen Mehrkantantrieb, einen Torxantrieb oder dergleichen.

Der Werkzeugadapter ist so ausgebildet, dass dieser in die den Schraubenkopf der Profilverbinderschraube aufnehmende hinterschnittene Längsnut seitlich, d.h. von der Profilstabstirnseite her einschiebbar ist, derart, dass der Abtriebsabschnitt des Antriebselementes unterhalb des Schraubenkopfes der Profilverbinderschraube zum Liegen kommt, um somit mit der Kronradverzahnung zum Lösen und/oder Festziehen der Profilverbinderschraube in Wechselwirkung treten, d.h. kämmen zu können. Bevorzugt bringt dabei das Antriebselement keine Axialkraft in Richtung der Längserstreckung der Profilnut auf die Kronradschraube auf, sondern verdreht diese lediglich in Umfangsrichtung, sodass ein Herausverdrängen des Werkzeugadapters entgegen der Einschubrichtung in der Profilnut sicher vermieden wird.

Das Werkzeug, insbesondere ein Werkzeugschaft kann dauerhaft, mit dem Antriebselement gekoppelt sein oder nur zeitweise, wobei im letztgenannten Fall besonders bevorzugt ist, wenn Mittel zum lösbaren, insbesondere rastendem Festlegen des Werkzeugs in bzw. am Werkzeugadapter vorgesehen sind, beispielsweise durch Eingreifen eines federnden Elementes in eine umlaufenden Nut in einem Werkzeugschaft.

Im Hinblick auf die konkrete Ausgestaltung des Gehäuses des Werkzeugadapters gibt es unterschiedliche Möglichkeiten. Für Anwendungen, in denen die Kronenradschraube im Randbereich in einer Profilnut eines Profilstabes aufgenommen werden soll ist es insbesondere bevorzugt, wenn in dem Gehäuse ein Führungskanal für das Werkzeug ausgebildet ist, der sich parallel zur Profilnut erstreckt, sodass das Werkzeug von einer Stirnseite eines Profilstabes her in die Profilnut und in den Führungskanal einführbar ist und/oder mit der Profilnut (hinterschnittenen Längsnut) fluchtet, wobei der Führungskanal bevorzugt die Verlängerung eines Aufnahmekanals für das Antriebselement ist. Bei einer alternativen Ausführungsform, die sich insbesondere für Anwendungen eignet, bei denen die Kronenradschraube bzw. deren Schraubenkopf weiter entfernt ist von einer Stirnseite des Profilstabes, verläuft der Führungskanal bevorzugt winklig zur Profilnutlängserstreckung. Bevorzugt ist der Winkel aus einem Wertebereich zwischen 10° und 75° gewählt.

Besonders bevorzugt ragt der Führungskanal bei der letztgenannten Ausführung in einen Bereich zwischen der hinterschnittenen Längsnut hinein, sodass schräg zur Längserstreckung der Längsnut durch die von den hinterschnittenen begrenzten Nutöffnung der hinterschnittenen Profilnut hindurch das Werkzeug in den Führungskanal eingeführt werden kann bzw. angeordnet ist. Insbesondere bei einer solchen Ausführungsform kann es vorteilhaft sein, dass Antriebselement mehrteilig auszugestalten und den Antriebs- und den Abtriebsabschnitt des Antriebselementes bauteilsmäßig voneinander zu trennen, wobei die beiden Bauteile in der Art eines Winkelgetriebes, beispielsweise eines Kegelradgetriebes oder eines Kardangetriebes antreibend miteinander zusammenwirken. Es ist jedoch auch eine einteilige Ausbildung möglich, insbesondere bei einer entsprechenden Ausgestaltung des Werkzeugs, beispielsweise mit einem gerundeten Antrieb, wie dies beispielsweise von gerundeten bzw. kugelkopfartigen Inbusantrieben bekannt ist. Ein Aufnahmekanal für das Antriebselement bzw. bei einer mehrteiligen Antriebselement des vorderen Abtriebsteils erstreckt sich entlang der Längserstreckung den Werkzeugadapter aufnehmenden Längsnut.

Neben dem Werkzeugadapter bzw. unabhängig von diesem führt die Erfindung auch auf ein Werkzeug, wobei bei Verwendung eines solchen Werkzeuges auf den Einsatz eines Werkzeugadapters verzichtet werden kann. Das Werkzeug zeichnet sich dadurch aus, dass dieses ein, bevorzugt eine rechteckige Querschnittskontur aufweisendes, Gehäuse zum, bevorzugt vollständigen, Einschieben in eine hinterschnittene Längsnut eines Profilstabes und zum Abstützen in der Profilnut aufweist, wobei ein rotierbarer Schaft des Werkzeugs in dem Gehäuse rotierbar aufgenommen ist. Der rotierbare Schaft kann entweder mittels eines Antriebs, beispielsweise eines elektromotorischen Antriebs des Werkzeugs rotierbar sein oder mittels eines Handgriffs. In diesem Fall handelt es sich um ein Handwerkzeug. Der Schaft weist an seinem vorderen Ende einen Abtriebsabschnitt auf, der ausgebildet ist zur Wechselwirkung mit einer Kronradverzahnung einer nach dem Konzept der Erfindung ausgebildeten Profilverbinderschraube. Auf einem Antriebsabschnitt, wie dieser im Falle des Werkzeugadapters zum Einsatz kommt, kann aufgrund der beschriebenen Ausgestaltung verzichtet werden. Im Prinzip entspricht also das Werkzeug von seiner Grundidee her dem Werkzeugadapter, wobei das Antriebeselement des Werkzeugadapters quasi den Schaft des Werkzeuges bildet, der aus dem Gehäuse heraus verlängert ist, um somit entweder mittels eines daran festgelegten Handgriffes oder mittels eines Antriebes rotiert zu werden.

Darüber hinaus führt die Erfindung auf ein System zum Herstellen einer nach dem Konzept der Erfindung ausgebildeten Profilverbinder, umfassend eine nach dem Konzept der Erfindung ausgebildete Profilverbinderschraube und einen Profilstab, der bevorzugt mit einer Führungsnut, wie zuvor erläutert, ausgestattet ist sowie ein Bauteil mit Innengewinde zum Einschrauben der Profilverbinderschraube, insbesondere in Form eines Profilstabes, noch weiter bevorzugt mit Zentralkanal. Anstatt die Profilverbinderschraube stirnseitig in einem Zentralkanal eines zweiten Profilstabes zu verschrauben, ist es auch möglich, die Profilverbinderschraube strinseitig in eine hinterschnittene Längsnut des zweiten Profilstabes einzuschrauben.

Das System umfasst weiterbildungsgemäß ein Werkzeug zum Verdrehen im Zusammenwirken mit der Kronenradverzahnung der Profilverbinderschraube, wobei weiterbildungsgemäß vorgesehen ist, dass ein Abstand zwischen der Verzahnung der Profilverbinderschraube und einem Nutgrund einer hinterschnittenen Längsnut oder einem Führungsnutgrund des ersten Profilstabes so bemessen ist, dass das in verdrehbarem Eingriff mit der Verzahnung befindliche Werkzeug auf dem Nutboden aufliegen kann.

Bevorzugt umfasst das System zusätzlich oder alternativ zu dem Werkzeug einen nach dem Konzept der Erfindung ausgebildeten Werkzeugadapter zum erleichterten Verdrehen der Profilverbinderschraube. Zusätzlich oder alternativ zu einem Werkzeugadapter kann das System auch ein zuvor beschriebenes, werkzeugadapterartiges Werkzeug aufweisen.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine perspektivische Ansicht einer bevorzugten Ausführungsform einer Profilverbinderschraube,
- Fig. 2:: ein Werkzeug zum Betätigen einer Profilverbinderschraube,
- Fig. 3:: eine Profilverbindung, umfassend eine Profilverbinderschraube,
- Fig. 4:: eine Schnittansicht durch die Profilverbindung gemäß Fig. 3 entlang der Schnittlinie A - A,
- Fig. 5:: eine Schnittansicht einer Profilverbindung mit Profilverbinderschraube.
- Fig. 6a und Fig. 6b:: unterschiedliche, teilweise geschnittene Ansichten eines Werkzeugs mit Werkzeugadapter, wobei hier Antriebselement und Werkzeug fluchten,

- Fig. 7:: eine teilweise geschnittene Darstellung eines alternativen Adapterelementes mit Werkzeug, wobei hier ein Führungskanal für das Werkzeug und das Abtriebselement winklig zueinander angeordnet sind,
- Fig. 8:: eine Profilverbindung mit den Adapterelementen und Werkzeugen gemäß den Fig. 6a, 6b und 7,
- Fig. 9:: eine ausschnittsweise Darstellung der Profilverbindung gemäß Fig. 8, und
- Fig. 10a und Fig. 10b:: unterschiedliche Ansichten des Antriebselementes der Werkzeugadapter gemäß den Fig. 6a, 6b und 7.

In den Figuren sind gleiche Elemente und Elemente mit der gleichen Funktion mit den gleichen Bezugszeichen gekennzeichnet.

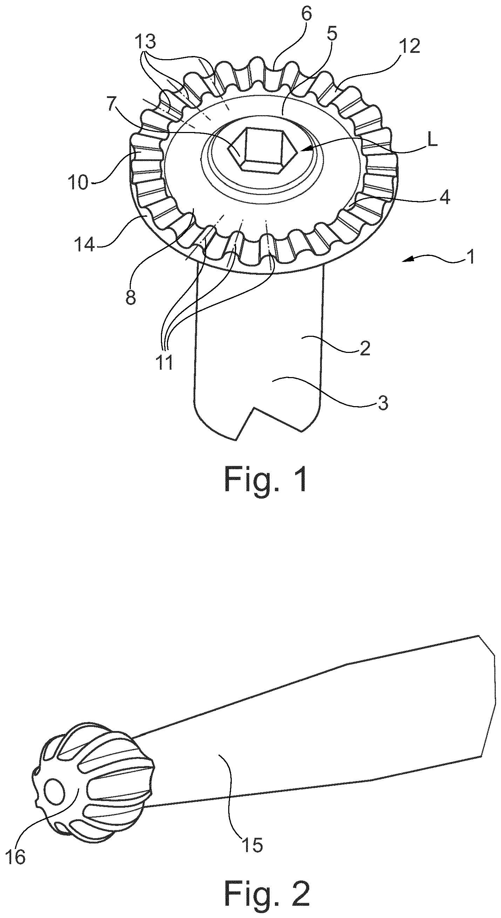

In Fig. 1 ist eine Profilverbinderschraube 1 zum Herstellen einer Profilverbindung gezeigt. Die Profilverbinderschraube 1 umfasst einen Schaft 2 mit Außengewinde 3 sowie einen hinteren bzw. endseitigen Schraubenkopf 4, der auf seiner hinteren, d.h. von dem Schaft 2 abgewandten Stirnseite 5 eine als Kronenradverzahnung ausgebildete Verzahnung 6 trägt. Die Verzahnung 6 ist konzentrisch zu einer Längsmittelachse L der Profilverbinderschraube 1 und konzentrisch zu einem Mehrkantvertiefungsantrieb 7 angeordnet, welcher dazu dient, die Profilverbinderschraube in einem Bauteil vorfixieren zu können, wobei die endgültige Fixierung mittels eines Werkzeugs in einer hinterschnittenen Längsnut eines den Schraubenkopf 8 der Profilverbinderschraube aufnehmenden hinterschnittenen Längsnut erfolgt.

Die Kronenradverzahnung umfasst eine Vielzahl von in Umfangsrichtung benachbarten Zähnen 9 mit jeweils einem von dem Schaft 2 abgewandten Zahnkopf 10. Entlang jedes Zahnkopfes 10 erstreckt sich eine gedachte Kopflinie 11, d.h. eine Art Firstkante, wobei die Kopflinien 11 in einer Kopfebene liegen, die in dem gezeigten Ausführungsbeispiel senkrecht zur Längsachse L orientiert ist, d.h. mit einer Radialebene zusammenfällt.

Zwischen jeweils zwei in Umfangsrichtung benachbarten Zähnen 9 befindet sich ein sogenannter Zahnfuß 12. Entlang jedes Zahnfußes 12 erstreckt sich in radialer Richtung eine gedachte Fußlinie 13, wobei die Fußlinien 13 in einer Fußebene liegen, die senkrecht zur Längserstreckung bzw. Längsachse L orientiert ist, also mit einer Radialebene zusammenfällt, die in dem gezeigten Ausführungsbeispiel, was bevorzugt ist, parallel zu der vorgenannten Kopfebene angeordnet ist.

Die Zähne 9 (Kronenradzähne) weisen zudem jeweils eine Außenumfangsfläche 14 auf, wobei die Außenumfangsflächen 14 auf einer gedachten Zylindermantelflächenhüllkontur liegen.

In Fig. 2 ist der untere Abschnitt eines Werkzeuges 15 zum Verdrehen einer beispielsweise wie in Fig. 1 dargestellten Profilverbinderschraube 1 gezeigt. Das Werkzeug 15 umfasst einen Verzahnungskopf 16 mit einer Evolventenverzahnung zum Zusammenwirken mit der als Evolventenverzahnung ausgebildeten Verzahnung 6 der Profilverbinderschraube 1. Der Verzahnungskopf 16 mit seiner Verzahnung weist eine im Wesentlichen kugelförmige Hüllkontur auf, wobei der Durchmesser der kugelförmigen Hüllkontur im Wesentlichen dem Abstand der Fußebene der Verzahnung 6 zu einem Nutgrund einer später noch zu erläuternden Führungsnut oder alternativ, falls keine Führungsnut vorhanden ist, zum Nutgrund einer die Profilverbindungsschraube, genauer deren Kopf aufnehmenden hinterschnittenen Längsnut eines Profilstabes in einer Profilverbindung entspricht.

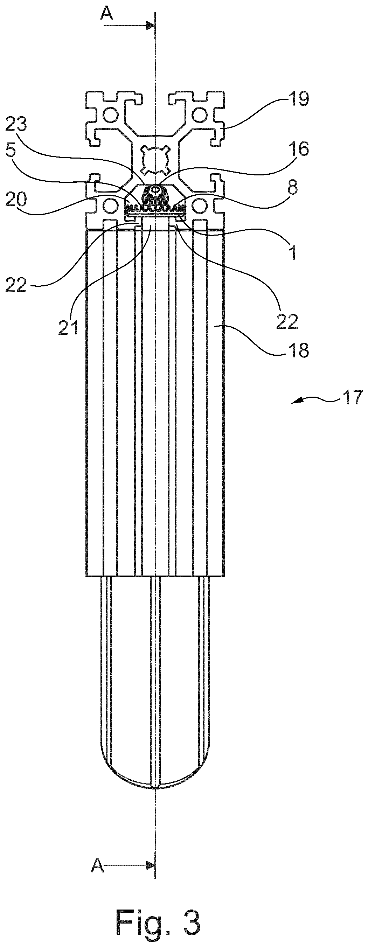

Fig. 3 zeigt eine mögliche Ausgestaltung einer Profilverbindung 17 mit einer erfindungsgemäßen Profilverbinderschraube 1. Diese ist mit ihrem Außengewinde mit einem als zweiter Profilstab 18 ausgebildeten Bauteil verschraubt, wobei an dem zweiten Profilstab 18, genauer stirnseitig im rechten Winkel ein erster Profilstab 19 angeordnet ist, der an jeder Flächenseite eine hinterschnittene Längsnut 20 aufweist, in welcher der Schraubenkopf 8 der Profilverbinderschraube 1 derart aufgenommen ist, dass dieser die eine Längsnutöffnung 21 begrenzenden Hinterschnittabschnitte 22 hintergreift und in der fertigen Profilverbindung den ersten Profilstab 19 mit einer Längsseite gegen die Stirnseite des zweiten Profilstabes 18 verspannt.

Der Durchmesser des Schraubenkopfes 8 entspricht in dem gezeigten Ausführungsbeispiel zumindest näherungsweise der maximalen Nutbreite der den Schraubenkopf 8 aufnehmenden hinterschnittenen Längsnut 20.

Wie sich aus Fig. 3 ergibt, greift in die hinterschnittene Längsnut 20 der Verzahnungskopf 16 eines Werkzeuges 15 ein, derart, dass sich der Verzahnungskopf 16 unterhalb der hinteren Stirnseite 5 des Schraubenkopfes 8 befindet und sich gleichzeitig am Nutgrund 23 der hinterschnittenen Längsnut 20 abstützt. Dabei greifen die Verzahnung des Verzahnungskopfes 16 und die Kronenradverzahnung der Profilverbinderschraube 1 ineinander ein, um die Profilverbinderschraube 1 verdrehen, insbesondere verspannen oder wieder lösen zu können.

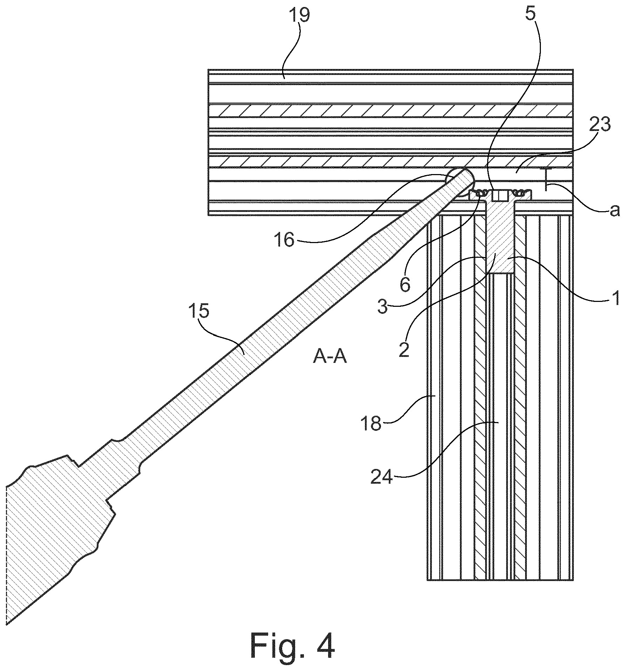

Vorstehender Sachverhalt wird insbesondere deutlich aus Fig. 4. Hier ist der erste Profilstab 19 und der dazu senkrecht angeordnete Profilstab 18 mit seiner zentralen Durchgangsöffnung 24 gezeigt, in die die Profilverbinderschraube 1 mit ihrem am Schaft 2 angeordneten Außengewinde 3 eingeschraubt ist. Ein Abstand a zwischen der Fußebene der Verzahnung 6 der Profilschraube 1 und dem Nutgrund 23 entspricht dem Durchmesser des Verzahnungskopfes 16 des Werkzeugs 15. Jedenfalls ist der Abstand a so bemessen, dass das Werkzeug 15 in die Verzahnung 6 wirksam eingreifen kann, und sich am Nutgrund 23 abstützen, wenn sich der Verzahnungskopf 16 unterhalb der Stirnseite 5 der Profilverbinderschraube 1 befindet.

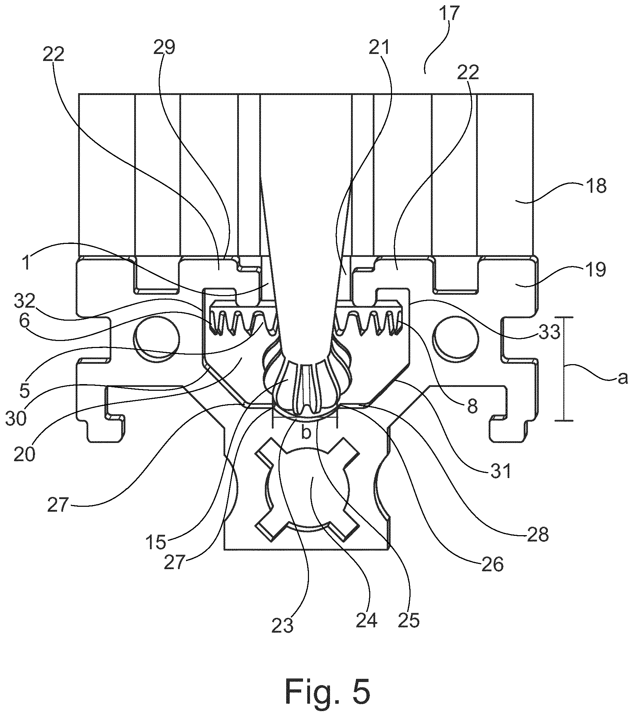

Fig. 5 zeigt eine Profilverbindung 17 mit zweitem und erstem Profilstab 18, 19. Der Schraubenkopf 8 der Profilschraube 1 hintergreift zwei seitliche Hinterschnittabschnitte 22, die eine Längsnutöffnung 21 einer langgestreckten, hinterschnittenen Längsnut 20 begrenzen.

Wie sich aus Fig. 5 ergibt, wird ein Nutgrund 23 der Längsnut 20 von einer langgestreckten Führungsnut 25 für das Werkzeug 15 gebildet, wobei die Führungsnut 25 in dem gezeigten Ausführungsbeispiel eine konkav gerundete Kontur aufweist. Insbesondere sind auch die beiden Führungsnutseitenwände gekrümmt ausgebildet. Alternativ ist auch ein rechteckiger Querschnitt der Führungsnut denkbar. Die Nutbreite b der Führungsnut ist geringer als die Breite der Längsnutöffnung 21.

An jede Oberkante 26, der Führungsnutseitenwände schließt ein Längsnutabschnitt 27, 28 ein, wobei jeder Längsnutabschnitt 27, 28 hier einen Bodenabschnitt der Längsnut 20 bildet. Die Längsnutabschnitte 27, 28 verlaufen parallel zu der die Längsnutöffnung 21 aufweisenden Außenfläche 29 des im Querschnitt quadratischen ersten Profilstabes 19.

Wie sich aus Fig. 5 ergibt, ist der Abstand a zwischen der Fußebene der Verzahnung 6 der Profilverbinderschraube 1 und dem Nutgrund 23 der Führungsnut 25 so bemessen, dass sich das Werkzeug 15 während des Verdrehens der Profilverbinderschraube in einem Bereich unterhalb der hinteren Stirnseite 5 der Profilverbinderschraube 1 am Nutgrund 23 abstützen kann.

Wie sich weiter aus Fig. 5 ergibt, schließt an jeden Längsnutabschnitt 27, 28 der hinterschnittenen Längsnut 20 ein Schrägabschnitt 30, 31 an, der unter einem Winkel von 45° zur Außenfläche 29 verläuft. An jeden Schrägabschnitt 30, 31 schließt ein gerader Abschnitt 32, 33 an, der senkrecht zur Außenfläche 19 orientiert ist und der den jeweiligen Schrägabschnitt 30, 31 mit einem zugehörigen Hinterschnittabschnitt 22 verbindet.

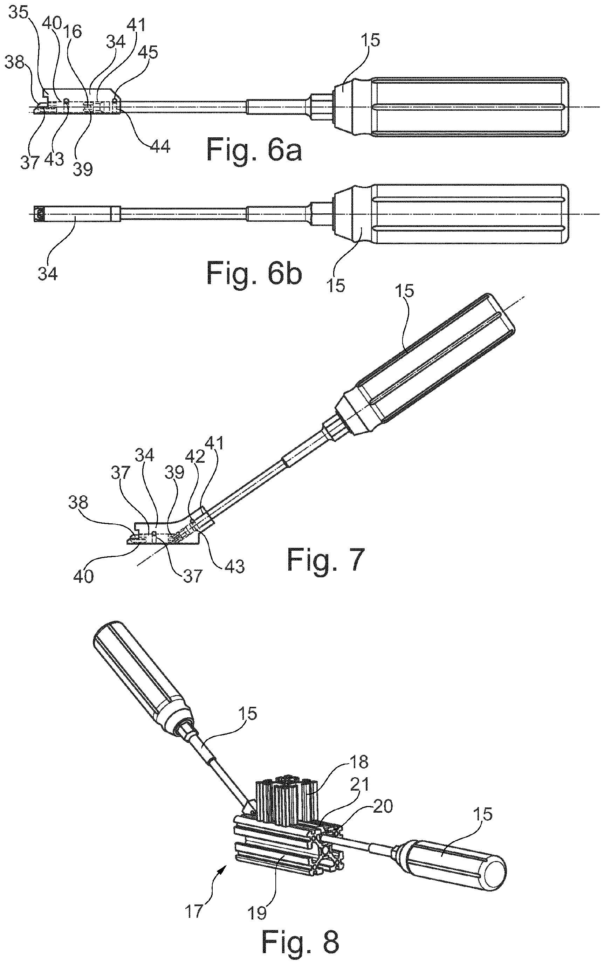

In den Fig. 6a und 6b ist ein als Handschraubendreher ausgebildetes Werkzeug 15 gezeigt, das im Gegensatz zu den vorhergehenden Ausführungsbeispielen nicht unmittelbar mit der Verzahnung 6 der Profilverbinderschraube 1 zusammenwirkt sondern mittelbar über einen Werkzeugadapter 34. Eine alternative Ausgestaltung eines Werkzeugadapters 34 ist in Fig. 7 gezeigt. Anstelle der gezeigten, als Handwerkzeuge ausgebildeten Werkzeuge 15 kann selbstverständlich auch ein einen Antrieb, insbesondere einen elektromotorischen Antrieb aufweisendes Werkzeug eingesetzt werden.

Der Werkzeugadapter 34 koppelt bei der bestimmungsgemäßen Verwendung des Werkzeugadapters 34 das Werkzeug 15, genauer den Verzahnungskopf 16 (oder allgemein Abtrieb) des Werkzeugs 15 mit der Verzahnung 6 der Profilverbinderschraube 1. Hierzu umfasst der Werkzeugadapter 34 ein Gehäuse 35, welches in einem vorderen, d.h. der Kronradschraube zugewandten Ende oben geöffnet ist oder alternativ von einem in dem Gehäuse 35 aufgenommen, hier beispielhaft einteiligen Antriebselement 37 in Axialrichtung der Längserstreckung der Profilnut überragt ist. Jedenfalls muss ganz allgemein unabhängig von der konkreten Ausgestaltungsform gewährleistet sein, dass das rotierbar angeordnete Antriebselement 37, genauer genommen, sein vorderer, eine mit der Verzahnung 6 der Profilverbinderschraube 1 korrespondierenden Verzahnung 6 aufweisender Abtriebsabschnitt 38 mit der Verzahnung 6 der Profilverbinderschraube 1 kämmen kann. Das Antriebselement 37 weist neben dem Abtriebsabschnitt 38 einen Antriebsabschnitt 39, hier in Form einer Mehrkantvertiefung zur Wechselwirkung mit dem Abtrieb des Werkzeugs 15 auf. Das Werkzeug 15 wirkt mit dem Antriebsabschnitt 39 derart zusammen, dass ein Drehmoment von dem Werkzeug 15 auf das Antriebselement 37 und von dessen Abtriebsabschnitt 38 auf die Verzahnung 6 der Profilverbinderschraube 1 übertragbar ist.

Neben der gezeigten einteiligen Ausgestaltung des Antriebselementes 37 ist auch eine mehrteilige, insbesondere zweiteilige Ausgestaltung möglich.

Das Antriebselement 37 ist in einem Aufnahmekanal 40 des Gehäuses 35 aufgenommen. Dieser Aufnahmekanal wird bei dem Ausführungsbeispiel gemäß den Fig. 6a und 6b axial fortgesetzt von einen Führungskanal 41 für den Schaft des Werkzeuges 15. Wie aus Fig. 8 zu erkennen ist, ermöglicht eine derartige Ausgestaltung das Verdrehen des Antriebselementes 37 und damit der Kronradschraube von einer Stirnseite eines Profilstabes 19 her. Der Werkzeugschaft fluchtet hier mit der Längserstreckung des Antriebselementes 37.

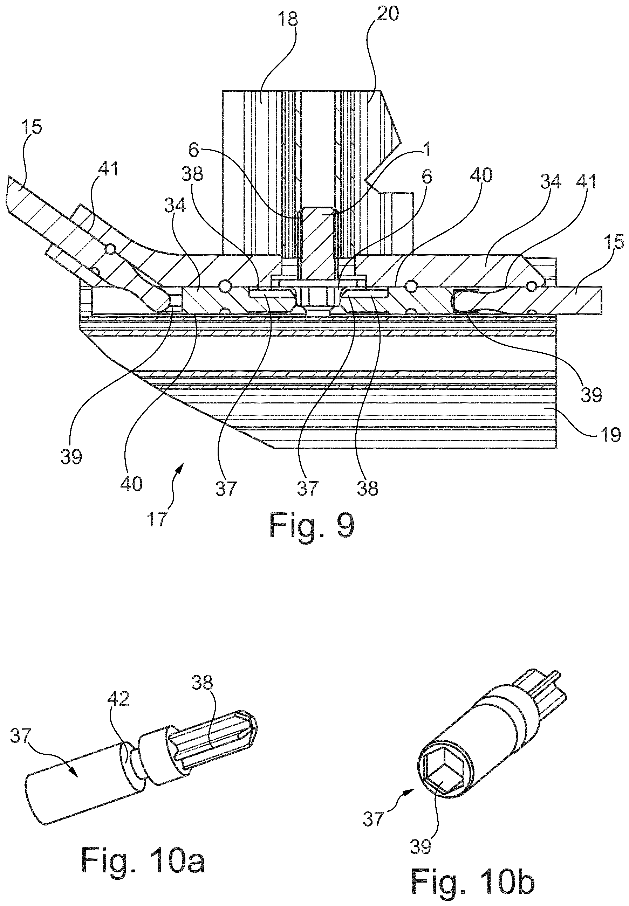

Das Antriebselement 37 ist in unterschiedlichen Perspektiven in den Fig. 10a und 10b gezeigt. Zu erkennen ist der die Gegenverzahnung zur Verzahnung 6 der Profilverbinderschraube 1 aufweisende Abtriebsabschnitt 38 sowie der endseitige Antriebsabschnitt 39, hier beispielhaft in Form einer Inbusvertiefung.

Das Antriebselement 37 ist mit einer umlaufenden mantelseitigen Haltenut 44 versehen, in die ein Halteelement 45, beispielsweise eine federnd gelagerte Kugel zur Positionssicherung eingreifen kann.

Bei Bedarf kann das Werkzeug 15 lösbar an dem Werkzeugadapter ausgebildet oder dauerhaft an diesem festgelegt sein.

In dem Ausführungsbeispiel gemäß den Fig. 6a und 7 ist beispielhaft gezeigt, dass das Werkzeug 15 über eine am Werkzeug ausgebildete Haltenut 43 am Werkzeugadapter festgelegt ist. Diese beispielhafte Verbindung kann lösbar ausgestaltet sein, beispielsweise wenn das in die Nut 43 hineinragende Halteelement 42 federnd gelagert ist. Alternative lösbare Ausgestaltungen der Verbindung sind ebenfalls realisierbar. Alternativ kann das Werkzeug 15 auch dauerhaft festgelegt sein. Das Ausführungsbeispiel des Werkzeugadapters 37 gemäß Fig. 7 unterscheidet sich von dem in den Fig. 6a und 6b gezeigten Werkzeugadapters in dem der Führungskanal 41 winklig zu dem Aufnahmekanal 40 bzw. den darin befindlichen Antriebselement 37 angeordnet ist, sodass, wie in Fig. 8 links gezeigt ist, das Werkzeug 15 zum Verdrehen des Antriebselementes 37 eine Längsöffnung 21 der hinterschnittenen Längsnut 20 schräg durchsetzt.

Fig. 9 zeigt eine Profilverbindung 17 mit einem als herkömmlicher Profilstab (mit hinterschnittener Längsnut) ausgebildeten ersten Profilstab 19 und einen senkrecht dazu orientierten zweiten Profilstab 18, wobei bis auf die fehlende Führungsnut im ersten Profilstab 19 die gezeigte Konfiguration der Profilstäbe 18, 19 sowie der Profilverbinderschraube 1 der in den Fig. 3 bis 5 gezeigten Konfiguration entspricht, sodass diesbezüglich auf die zugehörige Figurenbeschreibung verwiesen wird.

Zu erkennen ist die Profilverbinderschraube 1 mit ihrer als Kronenradverzahnung ausgebildeten Verzahnung 6. Diese kämmt mit jeweils einen Antriebselement 37 eines Werkzeugadapters 34.

Bevorzugt ist das Gehäuse 35 des Werkzeugadapters so ausgebildet, dass dieses im Rahmen der Profilverbindung zwischen die Hinterschnitte der seitlich offenen Längsnut eingreift.

In Fig. 9 rechts ist ein Werkzeugadapter 34 gemäß den Fig. 6a und 6b gezeigt, während in der Fig. 9 links ein Werkzeugadapter 34 mit schräg angeordnetem Führungskanal 41 analog zur Fig. 7 gezeigt ist. In beiden Fällen greift das Werkzeug 15, genauer dessen Abtrieb in den jeweiligen Antriebsabschnitt 39 des zugehörigen Antriebselementes 37 ein. Die jeweiligen Abtriebsabschnitte 38 kämmen mit der Verzahnung 6 der Profilverbinderschraube 1, welche mit ihrem Außengewinde, hier unmittelbar, alternativ mittelbar über ein Innengewindeelement an den senkrecht zum ersten Profilstab 19 angeordneten zweiten Profilstab 18 fixiert ist.

Die selbstverständlich auch unabhängig voneinander einsetzbaren Werkzeugadapter 34 sind sicher in der hinterschnittenen Profilnut des ersten Profilstabes 19 aufgenommen und zwar mit geringem Spiel, sodass sie sich beim Verdrehen des Werkzeuges 15 an den Nutwänden der hinterschnittenen Profilnut abstützen können.

### Bezugszeichenliste

- 1: Profilverbinderschraube
- 2: Schaft
- 3: Außengewinde
- 4: Schraubenkopf
- 5: Stirnseite
- 6: Verzahnung
- 7: Mehrkantvertiefungsantrieb
- 8: Schraubenkopf
- 9: Zahn
- 10: Zahnkopf
- 11: Kopflinien
- 12: Zahnfuß
- 13: Fußlinien
- 14: Außenumfangsfläche
- 15: Werkzeug
- 16: Verzahnungskopf
- 17: Profilverbindung
- 18: zweiter Profilstab
- 19: erster Profilstab
- 20: hinterschnittene Längsnut
- 21: Längsöffnung
- 22: Hinterschnittabschnitt
- 23: Nutgrund
- 24: Durchgangsöffnung
- 25: Führungsnut
- 26: Oberkante
- 27: Längsnutabschnitt
- 28: Längsnutabschnitt
- 29: Außenfläche
- 30: Schrägabschnitt
- 31: Schrägabschnitt
- 32: gerader Abschnitt
- 33: gerader Abschnitt
- 34: Werkzeugadapter
- 35: Gehäuse
- 37: Antriebselement
- 38: Abtriebsabschnitt
- 39: Antriebsabschnitt
- 40: Aufnahmekanal
- 41: Führungskanal
- 42: Halteelement
- 43: Haltenut
- 44: Halteelement
- 45: Haltenut

- L: Längsmittelachse der Profilverbinderschraube
- a: Abstand
- b: Breite der Führungsnut

## Patentansprüche

1. Profilverbinderschraube zum Festlegen eines mindestens eine hinterschnittene Längsnut (20) aufweisenden ersten Profilstabs (19) an einem Bauteil, insbesondere einem zweiten Profilstab (18), mit einem ein Außengewinde (3) aufweisenden Schaft (2) zum Fixieren der Profilverbinderschraube (1) an dem Bauteil und mit eine Verzahnung (6) umfassenden Antriebsmittel aufweisenden Schraubenkopf (4, 8) zur Anordnung in der hinterschnittenen Längsnut (20),
**dadurch gekennzeichnet,**
**dass** die Verzahnung (6) als stirnseitige Kronenradverzahnung ausgebildet ist,
und **dass** eine Fußebene der Verzahnung (6) und/oder eine, sich vorzugsweise parallel zur Fußebene der Verzahnung (6) erstreckende, Kopfebene der Verzahnung (6) mit einer Radialebene der Profilverbinderschraube (1) zusammenfällt.

2. Profilverbinderschraube nach Anspruch 1,
**dadurch gekennzeichnet,**
**dass** die Verzahnung (6) in einem zylinderfömigen Abschnitt, des, vorzugsweise zylindrischen, Schraubenkopfes (4, 8) vorgesehen ist.

3. Profilverbinderschraube nach einem der Ansprüche 1 oder 2,
**dadurch gekennzeichnet,**
**dass** eine Außenumfangshüllkontur der Verzahnung (6) zylindermantelförmig ist.

4. Profilverbinderschraube nach einem der vorhergehenden Ansprüche,
**dadurch gekennzeichnet,**
**dass** Zahnflanken der Verzahnung (6), zumindest abschnittsweise, eine Evolventengeometrie aufweisen, derart, dass die Verzahnung (6) mit einem eine Evolventengeometrie aufweisenden Antriebswerkzeug in der Art einer Evolventenverzahnung zusammen wirken kann.

5. Profilverbindungsschraube nach einem der vorhergehenden Ansprüche,
**dadurch gekennzeichnet,**
**dass** die Zähne der Verzahnung (6) eine größere Radialerstreckung als Axialerstreckung aufweisen.

6. Profilstab insbesondere zur Verwendung mit einer Profilverbinderschraube (1) nach einem der vorhergehenden Ansprüche, mit mindestens einer hinterschnittenen Längsnut (20), deren Längsnutöffnung zwischen zwei Hinterschnittabschnitten (22) ausgebildet ist,
**dadurch gekennzeichnet,**
**dass** innerhalb der Längsnut eine sich parallel und mit Abstand (a) zu der Längsnutöffnung angeordnete, seitliche Führungswände aufweisende Führungsnut (25) zum Führen eines Werkzeugs (15) zur Betätigung der Profilverbinderschraube (1) vorgesehen ist.

7. Profilverbindung mit einer in ein Innengewinde eines Bauteils, insbesondere eines zweiten Profilstabs (18), geschraubten Profilverbinderschraube (1) nach einem der Ansprüche 1 bis 5, deren Schraubenkopf (4, 8) in einer hinterschnittenen Längsnut (20) eines, bevorzugt gemäß Anspruch 6 ausgebildeten, ersten Profilstabs (19) aufgenommen ist und den ersten Profilstab (19) in Richtung des Bauteils kraftbeaufschlagt.

8. Profilverbindung nach Anspruch 7,
**dadurch gekennzeichnet,**
**dass** der Abstand (a) zwischen dem Fußgrund der Verzahnung (6) der Profilschraube und einem Nutgrund (23) einer Führungsnut (25) zumindest näherungsweise einer Führungsnutbreite entspricht.

9. Werkzeugadapter zum Zusammenwirken mit einem Werkzeug zum Festziehen und/oder Lösen einer Profilverbinderschraube nach einem der Ansprüche 1 bis 5,
**dadurch gekennzeichnet,**
**dass** der Werkzeugadapter (34) ein, bevorzugt eine rechteckige Querschnittskontur aufweisendes, Gehäuse (35) zum, bevorzugt vollständigen, Einschieben in eine hinterschnittene Längsnut (20) eines Profilstabes (18, 19) und zum Abstützen in der Profilnut aufweist und dass in dem Gehäuse (35) rotierbar ein Antriebselement (37) aufgenommen ist, welches einen eine Verzahnung (6) zum Antreiben der Kronenradverzahnung der Profilverbinderschraube (1) aufweisenden Abtriebsabschnitt (38) sowie einen Antriebsabschnitt (39) zur Wechselwirkung mit einem Werkzeug (15) zum Antreiben des Antriebselementes (37) aufweist.

10. Werkzeugadapter nach Anspruch 9,
**dadurch gekennzeichnet,**
**dass** dem Antriebsabschnitt (39) ein Führungskanal (41) zur seitlichen Führung des Werkzeuges, insbesondere eines Werkzeugschaftes zugeordnet ist, und dass der Führungskanal (41) mit der Längserstreckung des Antriebselementes (37), und vorzugsweise mit einem Aufnahmekanal (40) in dem Gehäuse (35) für das Antriebselement (37), fluchtet, um das Werkzeug (15) in Richtung der Längserstreckung einer das Gehäuse (35) aufnehmenden Profilnut des Profilstabes (18, 19) einführen zu können, oder dass der Führungskanal (41) winklig zur Längserstreckung des Antriebselementes (37), und vorzugsweise winklig zur Längserstreckung eines Aufnahmekanals (40) für das Antriebselement (37), angeordnet ist, damit das Werkzeug (15) durch eine von den hinterschnittenen Profilnut begrenzte Nutöffnung in den Führungskanal (41) einführbar ist.

11. Werkzeugadapter nach einem der Ansprüche 9 oder 10,
**dadurch gekennzeichnet,**
**dass** das Antriebselement (37) einteilig ausgebildet ist, oder dass das Antriebselement (37) mehrteilig, insbesondere zweiteilig, ausgebildet ist und der Abtriebsabschnitt (38) und der Antriebsabschnitt (39) an zwei unterschiedlichen, insbesondere in der Art eines Getriebes, bevorzugt eines Winkelgetriebes, beispielsweise eines Kardangetriebes oder einer Kegelradverzahnung, zusammenwirkend ausgebildet sind.

12. System zum Herstellen einer Profilverbindung (17) nach einem der Ansprüche 7 oder 8, umfassend eine Profilverbinderschraube (1) nach einem der Ansprüche 1 bis 5, einen, insbesondere nach Anspruch 6 ausgebildeten, ein hinterschnittene Längsnut (20) aufweisenden Profilstab (18, 19), sowie ein Bauteil mit Innengewinde zum Einschrauben der Profilverbinderschraube (1).

13. System nach Anspruch 12,
**dadurch gekennzeichnet,**
**dass** das System ein Werkzeug (15) zum verdrehenden Zusammenwirken mit der Kronenradverzahnung der Profilverbinderschraube (1) derart, dass auf das Werkzeug keine Radialkraftkomponente wirkt und/oder ein Werkzeugadapter (34) nach einem der Ansprüche 9 bis 11 umfasst.

14. System nach einem der Ansprüche 12 oder 13,
**dadurch gekennzeichnet,**
**dass** ein Abstand (a) zwischen der Verzahnung (6) der Profilverbinderschraube (1) und einem Längsnutgrund einer hinterschnittenen Längsnut (20) oder ein Führungsnutgrund des ersten Profilstabes (19) so bemessen ist, dass das in Eingriff mit der Verzahnung (6) befindliche Werkzeug (15) auf dem Nutgrund aufliegen kann.

15. System nach Anspruch 13,
**dadurch gekennzeichnet,**
**dass** das Gehäuse (35) des Werkzeugadapters (34), insbesondere vollständig, in der hinterschnittenen Längsnut (20) des Profilstabes (18, 19) aufgenommen ist, ganz besonders bevorzugt mit geringem Spiel, derart, dass sich das Gehäuse (35) beim Verdrehen des Antriebselementes (37) und damit der Verzahnung (6) der Profilverbinderschraube (1) mittels des Werkzeuges (15) an den Nutwänden der hinterschnittenen Längsnut (20) abstützen kann.

## Claims

1. A profile connector screw for fixing a first profile rod (19), which has at least one undercut longitudinal groove (20), on a component, in particular on a second profile rod (18), comprising a shaft (2) having an external thread (3) and serving to fix the profile connector screw (1) on the component, and comprising a screw head (4, 8) which has a driving means comprising a toothing (6) and which serves to be disposed in the undercut longitudinal groove (20),
**characterized in that**
the toothing (6) is realized as an end-side crown wheel toothing, and that a root plane of the toothing (6) and/or a tip plane of the toothing (6), which extends preferably parallel to the root plane of the toothing (6), coincides with a radial plane of the profile connector screw (1).

2. The profile connector screw according to claim 1,
**characterized in that**
the toothing (6) is provided in a cylindrical section of the preferably cylindrical screw head (4, 8).

3. The profile connector screw according to any one of claims 1 or 2, **characterized in that**
an outer circumferential enveloping contour of the toothing (6) has the shape of a cylinder barrel.

4. The profile connector screw according to any one of the preceding claims,
**characterized in that**
tooth sides of the toothing (6) have an involute geometry at least in sections in such a manner that the toothing (6) can interact with a driving tool having an involute geometry in the manner of an involute gear.

5. The profile connector screw according to any one of the preceding claims,
**characterized in that**
the radial extension of the teeth of the toothing (6) is greater than their axial extension.

6. A profile rod, in particular for use with a profile connector screw (1) according to any one of the preceding claims, comprising at least one undercut longitudinal groove (20) whose longitudinal groove opening is formed between two undercut sections (22), **characterized in that**
a guiding groove (25) serving to guide a tool (15) for actuating the profile connector screw (1) and extending parallel and at a distance (a) to the longitudinal groove opening and having lateral guiding walls is provided within the longitudinal groove.

7. A profile connection comprising a profile connector screw (1) according to any one of claims 1 to 5, said profile connector screw (1) being screwed into an internal thread of a component, in particular of a second profile rod (18), the screw head (4, 8) of the profile connector screw (1) being received in an undercut longitudinal groove (20) of a first profile rod (19), which is preferably configured according to claim 6, and exerting force on the first profile rod (19) in the direction of the component.

8. The profile connection according to claim 7,
**characterized in that**
the distance (a) between the root bottom of the toothing (6) of the profile screw and a groove bottom (23) of a guiding groove (25) corresponds at least approximately to a guiding groove width.

9. A tool adapter for interacting with a tool for tightening and/or loosening a profile connector screw according to any one of claims 1 to 5, **characterized in that**
the tool adapter (34) has a housing (35), which preferably has a rectangular cross-sectional contour, for being inserted, preferably fully, into an undercut longitudinal groove (20) of a profile rod (18, 19) and for providing support in the profile groove, and that a driving element (37) is accommodated so as to be rotatable in the housing (35), said driving element (37) having a driven portion (38), which has a toothing (6) for driving the crown wheel toothing of the profile connector screw (1), and a driving portion (39) for interacting with a tool (15) for driving the driving element (37).

10. The tool adapter according to claim 9,
**characterized in that**
a guiding channel (41) for laterally guiding the tool, in particular a tool shaft, is associated with the driving portion (39), and that the guiding channel (41) is aligned with the longitudinal extension of the driving element (37) and preferably with a receiving channel (40) in the housing (35) for the driving element (37) so as to allow the tool (15) to be inserted in the direction of the longitudinal extension of a profile groove of the profile rod (18, 19) receiving the housing (35), or that the guiding channel (41) is disposed at an angle to the longitudinal extension of the driving element (37) and preferably at an angle to the longitudinal extension of a receiving channel (40) for the driving element (37) in order for the tool (15) to be insertable into the guiding channel (41) through a groove opening defined by the undercut profile groove.

11. The tool adapter according to any one of claims 9 or 10, **characterized in that**
the driving element (37) is composed of one part or that the driving element (37) is composed of multiple parts, in particular two parts, and the driven portion (38) and the driving portion (39) are formed on two different parts so as to interact with each other, in particular in the manner of a gear, preferably an angular gear, such as a Cardan transmission or a bevel gear.

12. A system for producing a profile connection (17) according to any one of claims 7 or 8, comprising a profile connector screw (1) according to any one of claims 1 to 5, a profile rod (18, 19), in particular configured according to claim 6 and having an undercut longitudinal groove (20), and a component having an internal thread for screwing in the profile connector screw (1).

13. The system according to claim 12,
**characterized in that**
the system comprises a tool (15) for twisting interaction with the crown wheel toothing of the profile connector screw (1) in such a manner that no radial force component acts on the tool, and/or a tool adapter (34) according to any one of claims 9 to 11.

14. The system according to any one of claims 12 or 13, **characterized in that**
a distance (a) between the toothing (6) of the profile connector screw (1) and a longitudinal-groove bottom of an undercut longitudinal grove (20) or a guiding-groove bottom of the first profile rod (19) is dimensioned in such a manner that the tool (15) engaged with the toothing (6) can come into contact with the groove bottom.

15. The system according to claim 13,
**characterized in that**
the housing (35) of the tool adapter (34) is received, in particular fully, in the undercut longitudinal groove (20) of the profile rod (18, 19), particularly preferably with little clearance, in such a manner that the housing (35) can bear against the groove walls of the undercut longitudinal groove (20) when the driving element (37) and thus the toothing (6) of the profile connector screw (1) are being twisted by means of the tool (15).

## Revendications

1. Vis de raccord de profilés destinée a fixer une première barre profilée (19), qui a au moins une rainure longitudinale contre-dépouillée (20), sur un composant, notamment sur une deuxième barre profilée (18), comprenant une tige (2) ayant un filet externe (3) et servant à fixer la vis de raccord de profilés (1) sur le composant, et comprenant une tête de vis (4, 8) qui a un moyen d'entraînement comprenant une denture (6) et qui est destinée à être disposée dans la rainure longitudinale contre-dépouillée (20),
**caractérisée en ce que**
la denture (6) est réalisée comme une denture de couronne dentée frontale,
et **en ce qu'**un plan de pied de la denture (6) et/ou un plan de tête de la denture (6), qui s'étend de préférence parallèlement au plan de pied de la denture (6), coïncide avec un plan radial de la vis de raccord de profilés (1).

2. Vis de raccord de profilés selon la revendication 1,
**caractérisée en ce que**
la denture (6) est située dans une section cylindrique de la tête de vis (4, 8) de préférence cylindrique.

3. Vis de raccord de profilés selon l'une quelconque des revendications 1 ou 2,
**caractérisée en ce qu'**
un contour enveloppant circonférentiel extérieur de la denture (6) est en forme d'enveloppe cylindrique.

4. Vis de raccord de profilés selon l'une quelconque des revendications précédentes,
**caractérisée en ce que**
des flancs de dents de la denture (6) ont une géométrie développante au moins par sections de telle manière que la denture (6) peut interagir avec un outil d'entraînement ayant une géométrie développante à la façon d'un engrenage à développante.

5. Vis de raccord de profilés selon l'une quelconque des revendications précédentes,
**caractérisée en ce que**
l'extension radiale des dents de la denture (6) est supérieure à leur extension axiale.

6. Barre profilée, notamment pour être utilisée avec une vis de raccord de profilés (1) selon l'une quelconque des revendications précédentes, comprenant au moins une rainure longitudinale contre-dépouillée (20), l'ouverture de la rainure longitudinale étant formée entre deux sections contre-dépouillées (22),
**caractérisée en ce qu'**
une rainure de guidage (25) destinée à guider un outil (15) pour l'actionnement de la vis de raccord de profilés (1) et s'étendant parallèlement à et à une distance (a) de l'ouverture de la rainure longitudinale et ayant des parois de guidage latérales est située dans la rainure longitudinale.

7. Raccordement de profilés comprenant une vis de raccord de profilés (1) selon l'une quelconque des revendications 1 à 5, ladite vis de raccord de profilés (1) étant vissée dans un filet interne d'un composant, notamment d'une deuxième barre profilée (18), la tête de vis (4, 8) de la vis de raccord de profilés (1) étant reçue dans une rainure longitudinale contre-dépouillée (20) d'une première barre profilée (19), qui est configurée de préférence selon la revendication 6, et exerçant de la force sur la première barre profilée (19) dans la direction du composant.

8. Raccordement de profilés selon la revendication 7,
**caractérisé en ce que**
la distance (a) entre le fond de pied de la denture (6) de la vis de profilés et un fond (23) d'une rainure de guidage (25) correspond au moins approximativement à une largeur de la rainure de guidage.

9. Adaptateur d'outil destiné à interagir avec un outil pour serrer et/ou desserrer une vis de raccord de profilés selon l'une quelconque des revendications 1 à 5,
**caractérisé en ce que**
l'adaptateur d'outil (34) a un boîtier (35), qui a de préférence un contour de section transversale rectangulaire et qui est destiné à être inséré, de préférence complètement, dans une rainure longitudinale contre-dépouillée (20) d'une barre profilée (18, 19) et à s'appuyer dans la rainure profilée, et **en ce qu'**un élément d'entraînement (37) est accommodé de manière à être rotative dans le boîtier (35), ledit élément d'entraînement (37) ayant une partie entraînée (38), qui a une denture (6) pour entraîner la denture de couronne dentée de la vis de raccord de profilés (1), et une partie entraînante (39) pour interagir avec un outil (15) destiné à actionner l'élément d'entraînement (37).

10. Adaptateur d'outil selon la revendication 9,
**caractérisé en ce qu'**
un canal de guidage (41) pour le guidage latéral de l'outil, notamment d'une tige de l'outil, est associé à la partie entraînante (39), et **en ce que** le canal de guidage (41) est aligné avec l'extension longitudinale de l'élément d'entraînement (37) et, de préférence, avec un canal recevant (40) dans le boîtier (35) pour l'élément d'entraînement (37) de manière à permettre à l'outil (15) d'être inséré dans la direction de l'extension longitudinale d'une rainure profilée de la barre profilée (18, 19) recevant le boîtier (35), ou **en ce que** le canal de guidage (41) est disposé à un angle par rapport à l'extension longitudinale de l'élément d'entraînement (37) et, de préférence, à un angle par rapport à l'extension longitudinale d'un canal recevant (40) pour l'élément d'entraînement (37) afin que l'outil (15) puisse être inséré dans le canal de guidage (41) par une ouverture de rainure définie par la rainure profilée contre-dépouillée.

11. Adaptateur d'outil selon l'une quelconque des revendications 9 ou 10,
**caractérisé en ce que**
l'élément d'entraînement (37) est monobloc ou se composé de plusieurs parties, notamment de deux parties, et la partie entraînée (38) et la partie entraînante (39) sont formées sur deux parties différentes de manière à interagir, notamment à la façon d'un engrenage, de préférence d'un engrenage angulaire, tel qu'une transmission de cardan ou un couple conique.

12. Système destiné à former un raccordement de profilés (17) selon l'une quelconque des revendications 7 ou 8, comprenant une vis de raccord de profilés (1) selon l'une quelconque des revendications 1 à 5, une barre profilée (18, 19), configurée notamment selon la revendication 6 et ayant une rainure longitudinale contre-dépouillée (20), et un composant ayant un filet interne pour visser la vis de raccord de profilés (1) dans celui-ci.

13. Système selon la revendication 12,
**caractérisé en ce que**
le système comprend un outil (15) destiné à interagir de manière tournante avec la denture de la couronne dentée de la vis de raccord de profilés (1) de telle manière qu'aucun composant de force radial n'agit sur l'outil, et/ou un adaptateur d'outil (34) selon l'une quelconque des revendications 9 à 11.

14. Système selon l'une quelconque des revendications 12 ou 13, **caractérisé en ce qu'**
une distance (a) entre la denture (6) de la vis de raccord de profilés (1) et un fond d'une rainure longitudinale contre-dépouillée (20) ou un fond d'une rainure de guidage de la première barre profilée (19) est dimensionnée de telle manière que l'outil (15) engrené avec la denture (6) peut venir en contact avec le fond de la rainure.

15. Système selon la revendication 13,
**caractérisé en ce que**
le boîtier (35) de l'adaptateur d'outil (34) est reçu, notamment complètement, dans la rainure longitudinale contre-dépouillée (20) de la barre profilée (18, 19), de préférence particulière à faible jeu, de telle manière que le boîtier (35) peut s'appuyer contre les parois de la rainure longitudinale contre-dépouillée (20) quand l'élément d'entraînement (37) et ainsi la denture (6) de la vis de raccord de profilés (1) sont tournés à l'aide de l'outil (15).
